# EUROPÄISCHE PATENTANMELDUNG

(11) **EP 1 353 261 A1**
(43) Veröffentlichungstag der Anmeldung: **15.10.2003**
(21) Anmeldenummer: 03005881.2
(22) Anmeldetag: 15.03.2003
(51) Int. Cl.: G06F 1/16, H04N 5/64

(54) **Bediengehäuse mit eingebauter Videogeräte-Baueinheit**

(30) Priorität: 11.04.2002 DE 10216094
(71) Anmelder: Ritto GmbH & Co.KG, 35708 Haiger (DE)
(72) Erfinder: Heppner, Manfred, 35708 Haiger (DE)
(74) Vertreter: Fleck, Hermann-Josef, Dr.-Ing.

(57) **Zusammenfassung**

Die Erfindung betrifft ein Bediengehäuse mit einem eingebauten Videogerät mit Bildschirm, das in das Gerätegehäuse so eingebaut ist, dass der Bildschirm in eine Aufnahme des Gehäuse-Oberteils eingeführt ist. Ist nach der Erfindung vorgesehen, dass das Videogerät mit Bildschirm als handelsübliche Videogeräte-Baueinheit in einem Halterahmen befestigt ist, der mit auf die Befestigungsaufnahmen der Videogeräte-Baueinheit abgestimmten Befestigungsbohrungen versehen ist und auf mindestens zwei einander gegenüberliegenden Rahmenwände mit abstehenden Verbindungslaschen versehen ist, dass auf der Innenseite des Gehäuse-Oberteils auf die Anordnung der Verbindungslaschen abgestimmte Schraubdome angeformt sind, und dass der Halterahmen mit der darin befestigten Videogeräte-Baueinheit über die Verbindungslaschen mit den Schraubdomen des Gehäuse-Oberteils verschraubt und dabei der Bildschirm in die Aufnahme des Gehäuse-Oberteils eingeführt und darin gehalten ist, dann können mit auf die Videogeräte-Baueinheiten individuell abgestimmten Halterahmen ohne Änderung der Gehäuseteile diese in einfacher Weise im Gehäuse untergebracht und so befestigt werden, dass der Bildschirm in die Aufnahme des Gehäuse-Oberteils eingeführt oder an dieser anliegt.

## Beschreibung

Die Erfindung betrifft ein Bediengehäuse mit einem eingebauten Videogerät mit Bildschirm, das in das Gerätegehäuse so eingebaut ist, dass der Bildschirm in eine Aufnahme des Gehäuse-Oberteils eingeführt ist.

Es werden heute auf dem Markt immer mehr Videogeräte-Baueinheiten angeboten, in die der Bildschirm integriert ist und die so als Einbaueinheit in die unterschiedlichsten Bediengehäuse eingebaut werden können. Da an die Bediengehäuse je nach Verwendung als Türstation oder Wohnungsstation einer Türanlage oder als Steuergerät für eine Maschinensteuerung unterschiedliche Anforderungen gestellt werden, sind die Gehäuseteile, insbesondere das Gehäuse-Oberteil, mit den verschiedensten Bauteilen bestückt und mit entsprechenden Befestigungselementen versehen, die aus Kostengründen in der Regel schon bei der Herstellung der Gehäuseteile angeformt werden.

Es ist daher nicht einfach möglich, in ein konzipiertes Gehäuse, das wohl mit einer genormten Aufnahme für einen Bildschirm versehen ist, immer die beste und die kostengünstigste Videogeräte-Baueinheit einzusetzen, da die Gehäuseteile nicht die erforderlichen Befestigungs- und Verbindungselemente für den wahlweisen Einsatz der einen oder anderen Videogeräte-Baueinheit besitzen. Dies erfordern aber gerade die mit unterschiedlichen Befestigungsaufnahmen versehenen Videogeräte-Baueinheiten.

Es ist daher Aufgabe der Erfindung, ein Bediengehäuse der eingangs erwähnten Art zu schaffen, in das auf einfache Weise unterschiedliche Videogeräte-Baueinheiten eingebaut werden können, ohne die Gehäuseteile ändern zu müssen.

Diese Aufgabe wird nach der Erfindung dadurch gelöst, dass das Videogerät mit Bildschirm als handelsübliche Videogeräte-Baueinheit in einem Halterahmen befestigt ist, der mit auf die Befestigungsaufnahmen der Videogeräte-Baueinheit abgestimmten Befestigungsbohrungen versehen ist und auf mindestens zwei einander gegenüberliegenden Rahmenwände mit abstehenden Verbindungslaschen versehen ist, dass auf der Innenseite des Gehäuse-Oberteils auf die Anordnung der Verbindungslaschen abgestimmte Schraubdome angeformt sind, und dass der Halterahmen mit der darin befestigten Videogeräte-Baueinheit über die Verbindungslaschen mit den Schraubdomen des Gehäuse-Oberteils verschraubt und dabei der Bildschirm in die Aufnahme des Gehäuse-Oberteils eingeführt und darin gehalten ist.

Jeder Videogeräte-Baueinheit kann bei dieser Ausgestaltung ein angepasster Halterahmen zugeordnet werden, der in einheitlicher Weise mit dem Gehäuse-Oberteil verbunden wird, selbst aber auf die Videogeräte-Baueinheit mit den spezifischen Befestigungsaufnahmen abgestimmt ist. Es bereitet keine Schwierigkeiten, das Bediengehäuse auf den Einsatz einer neuen Videogeräte-Baueinheit umzurüsten, da dazu nur ein entsprechend angepasster, billiger Halterahmen bereitgestellt werden muss, die komplizierten und mit teueren Werkzeugen herstellbaren Gehäuseteile können dabei unverändert bleiben. Dies ist ohne weiteres möglich, da die Bildschirme und damit auch die Aufnahmen in den Gehäuse-Oberteilen genormte Abmessungen aufweisen.

Nach einer bevorzugten Ausgestaltung ist vorgesehen, dass die Videogeräte-Baueinheit quaderförmig ausgebildet ist und auf allen vier Seiten mindestens eine Befestigungsaufnahme, vorzugsweise in Form einer Gewindeaufnahme aufweist, und dass der Halterahmen die quaderförmige Videogeräte-Baueinheit umschließt und in den vier Rahmenwänden mit je einer Befestigungsbohrung versehen ist, über die eine Befestigungsschraube in die zugeordnete Befestigungsaufnahme der Videogeräte-Baueinheit einschraubbar ist. Die Videogeräte-Baueinheit kann daher mit wenigen Befestigungsschrauben in dem Halterahmen befestigt werden.

Dabei kann der Halterahmen die Videogeräte-Baueinheit auf der dem Gehäuse-Oberteil abgekehrten Seite dadurch noch abstützen, dass die dem Gehäuse-Oberteil abgekehrte Seite des Halterahmens mit mindestens einem bügelförmigen Anlageteil für die Videogeräte-Baueinheit abgeschlossen ist.

Die mit einer Befestigungsbohrung versehenen Verbindungslaschen können an den Rahmenwänden angeformt oder ausgestanzt und ausgebogen sein, so dass der Halterahmen mit den Verbindungslaschen als Kunststoff-Spritzgussteil oder als Blech-Stanz-Biegeteil hergestellt werden kann.

Eine bündige Befestigung des Halterahmens mit der Innenseite des Gehäuse-Oberteils wird dadurch erreicht, dass die Höhe der Schraubdome und der Abstand der Verbindungslaschen von der dem Gehäuse-Oberteil zugekehrten Seite des Halterahmens so gewählt sind, dass der Halterahmen in der Verbindungsstellung an der Innenseite des Gehäuse-Oberteils anliegt. Dabei kann eine starre Verbindung dadurch unterbunden werden, dass die Verbindungslaschen über ringförmige Dämpfungselemente auf den Schraubdomen aufliegen.

Da die Schraubdome doch eine beachtliche Höhe einnehmen können, sieht aus Herstellungs- und Stabilitätsgründen eine Weiterbildung vor, dass die Schraubdome in den zur Innenseite des Gehäuse-Oberteils auslaufenden Endbereichen durch angeformte Versteifungsplatten versteift sind.

Ist nach einer weiteren Ausgestaltung vorgesehen, dass im Bereich um die Ausnehmung in dem Gehäuse-Oberteil weitere Schraubdome angeformt sind, die auf die Anbringung anderer Anzeigeeinheiten abgestimmt sind, dann können anstelle der Videogeräte-Baueinheit auch andere Anzeigeeinheiten in das Gehäuse-Oberteil eingebaut werden.

Die sichere Einführung des Bildschirmes in die Aufnahme des Gehäuse-Oberteils wird dadurch gewährleistet, dass die Videogeräte-Baueinheit nur mit dem Bildschirm an der dem Gehäuse-Oberteil zugekehrten Seite des Halterahmens vorsteht und dass der genormte Bildschirm in die mit Normmaßen ausgelegte Aufnahme des Gehäuse-Oberteils eingeführt ist.

Ist weiterhin vorgesehen, dass unterschiedliche Halterahmen mit auf verschiedene Videogeräte-Baueinheiten abgestimmten Befestigungsbohrungen und Verbindungslaschen vorgesehen sind, dann kann das Bediengehäuse leicht mit einer Videogeräte-Baueinheit bestückt werden, die dem Wunsch des Abnehmers entspricht.

Die Erfindung wird anhand eines in den Zeichnungen dargestellten Ausführungsbeispiels näher erläutert. Es zeigen:
- Fig. 1: in perspektivischer Draufsicht die Frontseite des Gehäuse-Oberteils,
- Fig. 2: in perspektivischer Ansicht das Gehäuse-Oberteil nach Fig. 1 auf die Innenseite gesehen,
- Fig. 3: in perspektivischer Ansicht einen Halterahmen auf die dem Gehäuse-Oberteil abgekehrte Seite,
- Fig. 4: in perspektivischer Ansicht den Halterahmen nach Fig. 3 auf die dem Gehäuse-Oberteil zugekehrte Seite und
- Fig. 5: in Montagestellung das Gehäuse-Oberteil und die im Halterahmen befestigte Videogeräte-Baueinheit.

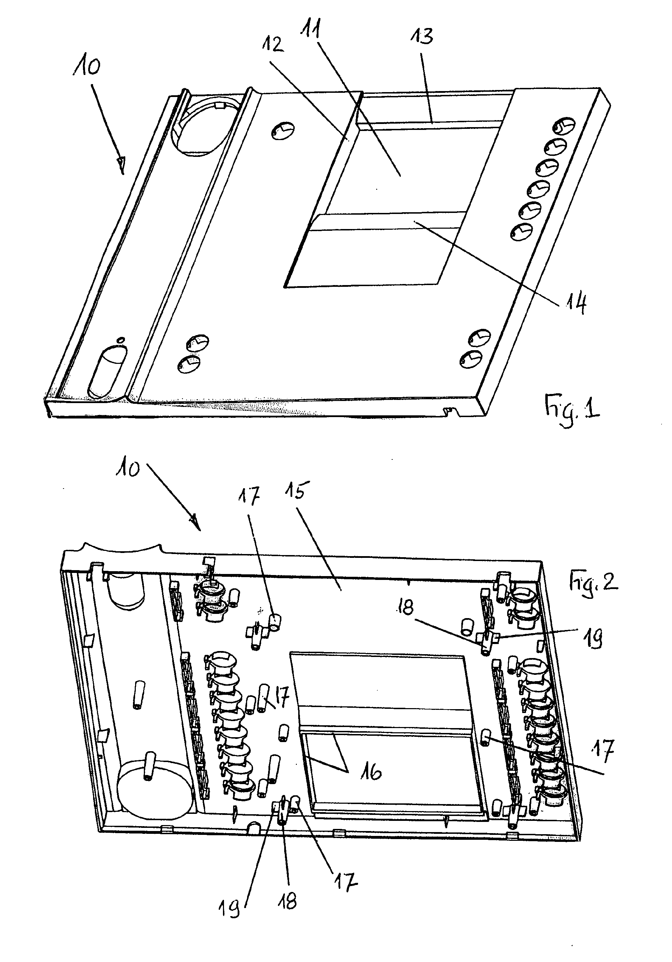

Wie die Ansicht nach Fig. 1 erkennen lässt, sind in dem Gehäuse-Oberteil eine Vielzahl von nicht bezeichneten Aufnahmen mit Befestigungselementen vorgesehen, um die benötigten Funktionselemente, wie Tasten und andere Bedienungs- sowie Anzeigeelemente einbauen zu können. Dies richtet sich in erster Linie nach der Anwendung und dem Einsatz des Bediengehäuses und macht daher auch die Herstellung der erforderlichen Gehäuseteile so kompliziert und teuer, wie insbesondere auch durch die Ansicht nach Fig. 1 des Gehäuse-Oberteils dokumentiert wird. Auf diese Ausgestaltung der Gehäuseteile braucht im Rahmen der vorliegenden Erfindung jedoch nicht näher eingegangen werden, da diese sich nur auf den Einbau einer Videogeräte-Baueinheit konzentriert und gerade diesen so vereinfacht, dass unterschiedliche Videogeräte-Baueinheiten ohne Veränderung der Gehäuseteile eingesetzt werden können.

Die Aufnahme 1 1 im Gehäuse-Oberteil 10 ist auf die Normmaße eines genormten Bildschirms abgestimmt und wird durch die Aufnahmewände 12, 13 und 14 begrenzt, die wie Fig. 2 zeigt, auf der Innenseite des Gehäuse-Oberteils 10 einen Anlagerahmen 16 bilden.

Auf der Innenseite des Gehäuse-Oberteils 10 sind Schraubdome 17 und 18 angeformt, die bei entsprechender Höhe auch im Endbereich durch in die Frontseite auslaufenden Versteifungsplatten 19 gestützt und versteift sein können.

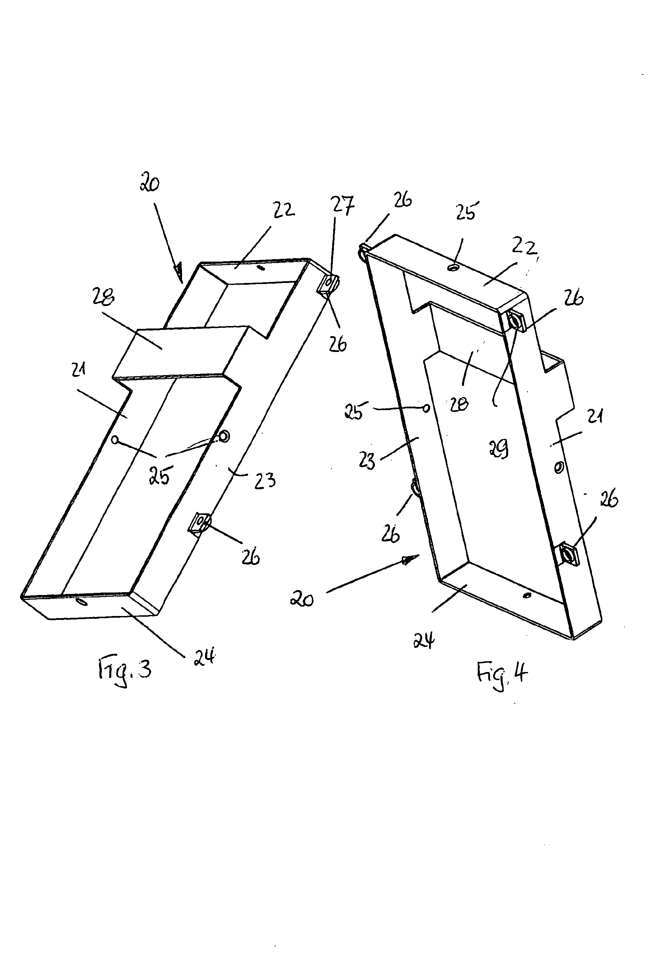

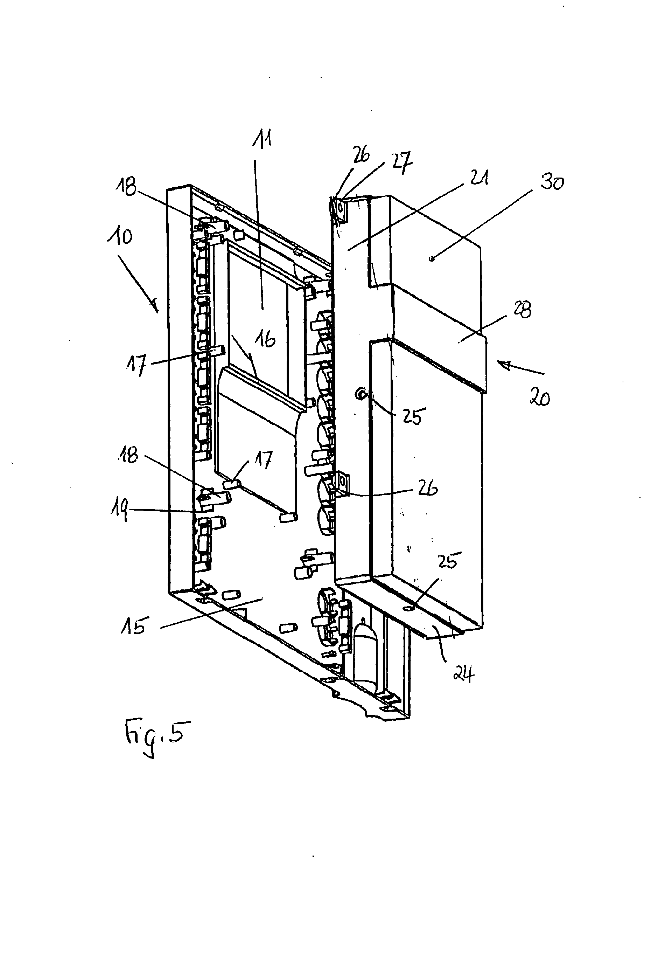

Wie die Fig. 3 und 4 zeigen, wird zum Einbau einer Videogeräte-Baueinheit ein Halterahmen 20 bereitgestellt, der durch die Rahmenwände 21, 22, 23 und 24 gebildet ist. In den Rahmenwänden 21 bis 24 sind Befestigungsbohrungen 25 vorgesehen, die auf die Anordnung von Befestigungsaufnahmen der quaderförmig ausgebildeten Videogeräte-Baueinheit 30 (Fig. 5) abgestimmt sind. Mit vier Befestigungsschrauben kann die Videogeräte-Baueinheit 30 in dem Halterahmen 20 befestigt werden, wobei sie noch durch den bügelförmigen Anlageteil 28 abgestützt ist. An der der Innenseite 15 des Gehäuse-Oberteils 10 zugekehrten Seite steht nur der Bildschirm vor und liegt auf dem Anlagerahmen 16 auf oder ist in die Aufnahme 11 eingeführt.

An zwei einander gegenüberliegenden Rahmenwänden 21 und 23 sind jeweils zwei Verbindungslaschen 26 mit Befestigungsbohrungen 27 vorgesehen, die angeformt oder ausgestanzt und ausgebogen sein können. Dies bedeutet, dass der Halterahmen 20 leicht als Kunststoff-Spritzgussteil oder Blech-Stanz-Biegeteil kostengünstig hergestellt werden kann. Es ist daher vertretbar, wenn bei einer anderen Videogeräte-Baueinheit ein anderer Halterahmen 20 erforderlich wird. Es muss nur dafür Sorge getragen werden, dass bei allen Halterahmen 20 die Verbindungslaschen 26 mit ihren Befestigungsbohrungen 28 auf die Schraubdome 18 ausgerichtet sind und in ihren Abständen und Höhen so aufeinander abgestimmt sind, dass die Halterahmen 20 mit der zugekehrten Seite an der Innenseite 15 des Gehäuse-Oberteils 10 zur Anlage kommt oder in kleinem Abstand zu dieser steht, wenn der Halterahmen 20 mit dem Gehäuse-Oberteil 10 verbunden ist.

Auf diese Weise lassen sich die Halterahmen 20, die mit ihren Befestigungsbohrungen 25 auf unterschiedliche Videogeräte-Baueinheiten 30 abgestimmt sind, ohne Änderung des Gehäuse-Oberteils 10 in diesem befestigen. Dabei kann auch der bügelförmige Anlageteil 28 an die Tiefe der Videogeräte-Baueinheit 30 angepasst werden. Der Bildschirm kann dabei in einer Ebene enden, die mit der Verbindungsebene der Verbindungslaschen 26 und der Schraubdome 18 zusammenfällt und mit dem Anlagerahmen 16 der Ausnehmung 11 gleich ist.

Nicht gezeigt ist in den Zeichnungen auch das mit dem Gehäuse-Oberteil 10 zu verbindende Gehäuse-Unterteil, das die übrigen im Gehäuse untergebrachten Einbauten, samt der im Halterahmen 20 befestigten Videogeräte-Baueinheit 30, abdeckt.

## Patentansprüche

1. Bediengehäuse mit einem eingebauten Videogerät mit Bildschirm, das in das Gerätegehäuse so eingebaut ist, dass der Bildschirm in eine Aufnahme des Gehäuse-Oberteils eingeführt ist,
**dadurch gekennzeichnet,**
**dass** das Videogerät mit Bildschirm als handelsübliche Videogeräte-Baueinheit (30) in einem Halterahmen (20) befestigt ist, der mit auf die Befestigungsaufnahmen der Videogeräte-Baueinheit (30) abgestimmten Befestigungsbohrungen (25) versehen ist und auf mindestens zwei einander gegenüberliegenden Rahmenwände (21, 23) mit abstehenden Verbindungslaschen (26) versehen ist,
**dass** auf der Innenseite (15) des Gehäuse-Oberteils (10) auf die Anordnung der Verbindungslaschen (26) abgestimmte Schraubdome (18) angeformt sind, und
**dass** der Halterahmen (20) mit der darin befestigten Videogeräte-Baueinheit (30) über die Verbindungslaschen (26) mit den Schraubdomen (18) des Gehäuse-Oberteils (10) verschraubt und dabei der Bildschirm in die Aufnahme (11) des Gehäuse-Oberteils (10) eingeführt und darin gehalten ist.

2. Bediengehäuse nach Anspruch 1,
**dadurch gekennzeichnet,**
**dass** die Videogeräte-Baueinheit (30) quaderförmig ausgebildet ist und auf allen vier Seiten mindestens eine Befestigungsaufnahme, vorzugsweise in Form einer Gewindeaufnahme aufweist, und
**dass** der Halterahmen (20) die quaderförmige Videogeräte-Baueinheit (30) umschließt und in den vier Rahmenwänden (21, 22, 23, 24) mit je einer Befestigungsbohrung (25) versehen ist, über die eine Befestigungsschraube in die zugeordnete Befestigungsaufnahme der Videogeräte-Baueinheit (30) einschraubbar ist.

3. Bediengehäuse nach Anspruch 1 oder 2,
**dadurch gekennzeichnet,**
**dass** die dem Gehäuse-Oberteil (10) abgekehrte Seite des Halterahmens (20) mit mindestens einem bügelförmigen Anlageteil (28) für die Videogeräte-Baueinheit (30) abgeschlossen ist.

4. Bediengehäuse nach einem der Ansprüche 1 bis 3,
**dadurch gekennzeichnet,**
**dass** die Verbindungslaschen (26) mit Befestigungsbohrungen (27) an den Rahmenwänden (21, 23) angeformt oder ausgestanzt und ausgebogen sind.

5. Bediengehäuse nach einem der Ansprüche 1 bis 4,
**dadurch gekennzeichnet,**
**dass** die Höhe der Schraubdome (18) und der Abstand der Verbindungslaschen (26) von der dem Gehäuse-Oberteil (10) zugekehrten Seite des Halterahmens (20) so gewählt sind, dass der Halterahmen (20) in der Verbindungsstellung an der Innenseite des Gehäuse-Oberteils (10) anliegt.

6. Bediengehäuse nach Anspruch 5,
**dadurch gekennzeichnet,**
**dass** die Verbindungslaschen (26) über ringförmige Dämpfungselemente (29) auf den Schraubdomen (18) aufliegen.

7. Bediengehäuse nach einem der Ansprüche 1 bis 6,
**dadurch gekennzeichnet,**
**dass** die Schraubdome (18) in den zur Innenseite (15) des Gehäuse-Oberteils (10) auslaufenden Endbereichen durch angeformte Versteifungsplatten (19) versteift sind.

8. Bediengehäuse nach Anspruch 4,
**dadurch gekennzeichnet,**
**dass** der Halterahmen (20) mit den Verbindungslaschen (26) als Kunststoff-Spritzgussteil oder als Blech-Stanz-Biegeteil hergestellt ist.

9. Bediengehäuse nach einem der Ansprüche 1 bis 8,
**dadurch gekennzeichnet,**
**dass** im Bereich um die Ausnehmung (11) in dem Gehäuse-Oberteil (10) weitere Schraubdome (17) angeformt sind, die auf die Anbringung anderer Anzeigeeinheiten abgestimmt sind.

10. Bediengehäuse nach einem der Ansprüche 1 bis 9,
**dadurch gekennzeichnet,**
**dass** die Videogeräte-Baueinheit (30) nur mit dem Bildschirm an der dem Gehäuse-Oberteil (10) zugekehrten Seite des Halterahmens (20) vorsteht und
**dass** der genormte Bildschirm in die mit Normmaßen ausgelegte Aufnahme (11) des Gehäuse-Oberteils (10) eingeführt ist.

11. Bediengehäuse nach einem der Ansprüche 1 bis 10,
**dadurch gekennzeichnet,**
**dass** unterschiedliche Halterahmen (20) mit auf verschiedene Videogeräte-Baueinheiten (30) abgestimmten Befestigungsbohrungen (25) und Verbindungslaschen (26) vorgesehen sind.
